# EUROPÄISCHE PATENTSCHRIFT

(11) **EP 1 344 628 B1**
(45) Veröffentlichungstag und Bekanntmachung des Hinweises auf die Patenterteilung: **14.04.2004**
(21) Anmeldenummer: 03005290.6
(22) Anmeldetag: 11.03.2003
(51) Int. Cl.: B29C 51/04, B29C 51/26

(54) **Formwerkzeug zum Tiefziehen von Behältern aus thermoplastischem Kunstoff**
Apparatus for deep drawing of plastic containers
Appareil pour l'emboutissage de récipients en thermoplastique

(30) Priorität: 14.03.2002 DE 10211125
(43) Veröffentlichungstag der Anmeldung: 17.09.2003
(73) Patentinhaber: Adolf Illig Maschinenbau GmbH & Co. KG, 74081 Heilbronn (DE)
(72) Erfinder: Trautwein, Herbert, 71737 Kirchberg (DE); Schleithauer, Michael, 74842 Billigheim (DE); Trefz, Thomas, 71546 Grossaspach (DE); Teller, Marcus, 74078 Heilbronn (DE); Kratochwill, Klaus, 74078 Heilbronn (DE)

(56) Entgegenhaltungen:
- EP-A- 1 103 365
- EP-A- 1 106 330
- EP-A- 1 297 943

## Beschreibung

Die Erfindung geht aus von einem Formwerkzeug nach dem Oberbegriff des Anspruches 1. Mit diesem werden aus einer erwärmten Folienbahn aus thermoplastischem Kunststoff mittels Druckluft Behälter tiefgezogen und ggf. ausgestanzt.

Aus der DE 199 56 506 A1 und der EP 0 457 664 A1 sind Formwerkzeug bekannt, bei denen jeder Vorstrecker als Kolben ausgebildet bzw. mit einem Kolben verbunden ist, der im Niederhalter gleitend und dichtend geführt ist. Die Druckluft zur Formung der Behälter wird durch die Stange des Streckhelfers zugeführt. Der Grund dieser Ausbildung liegt darin, dass Druckluft zum Formen der Behälter eingespart werden soll, indem der Innenraum des Niederhalters hinter dem Streckhelfer beim Zuleiten der Druckluft nicht mit dieser gefüllt werden muss, sondern einen niedrigeren Druck aufweisen kann. Zudem sollte die Taktzahl durch diese Maßnahme positiv beeinflusst werden.

Nachteile bei dieser Ausbildung treten auf, wenn bei der Umrüstung des Formwerkzeuges auf eine andere Behältergestalt durch Tausch entsprechender Formeinsätze im Werkzeugunterteil auch die Vorstrecker getauscht werden müssen. Die Ausbildung als Kolben verhindert oder erschwert die Anordnung und die Zugänglichkeit von Schnellwechseleinrichtungen für die Streckhelfer, wie sie beispielsweise in der DE 197 49 257 A1 beschrieben sind. Die Lagerung der ausgebauten Streckhelfer bedarf großer Sorgfalt, weil eine Beschädigung der Dichtungen vermieden werden muss. Ein weiterer Nachteil ist dadurch gegeben, dass der Kolben immer im Niederhalter geführt sein muss, aus diesem also nach unten nicht austreten darf. Als Folge sind lange Niederhalter erforderlich - länger als der Verschiebeweg der Steckhelfer, auch wenn kürzere Streckhelfer verfahrenstechnisch völlig ausreichen würden. Dies wirkt sich nachteilig auf die Bauhöhe des Werkzeugoberteiles aus.

Diese Nachteile sind bei einem Formwerkzeug, wie es in der nicht vorveröffentlichten EP 1 297 943 A1 dargestellt ist, vermieden, indem zwischen dem Streckhelfer und dem Niederhalter je ein Verdichterkolben mit einer eigenen Antriebseinrichtung vorgesehen ist. Dieser Verdichterkolben soll auch dem Aufbau des Formdruckes durch Volumenverminderung dienen, wofür allerdings eine hohe Antriebsleistung erforderlich ist, weil in kurzer Zeit ein hoher Druckanstieg erzielt werden muss, der eine Gegenkraft auf den Verdichterkolben ausübt. Steht der Verdichterkolben in unterer Lage muss dieser Kraft vom Antrieb gegengehalten werden. Für die Baumaße solcher Antriebe hoher Leistung bestehen Platzprobleme im Bereich des Werkzeugoberteils. Dem kann dadurch begegnet werden, dass die Verdichterkolben nur als Sperrkolben ausgebildet und ohne Druckaufbau ausgefahren werden und erst dann Druckluft als Formluft zugeführt wird. Diese Alternative ist in der genannten Schrift als Anspruch 5 angedeutet. Die erforderliche Verschiebekraft ist damit gering. Die Formluftzufuhr führt allerdings zur gleichen hohen Kraft, die vom Antrieb gehalten werden muss.

Der Erfindung liegt die Aufgabe zugrunde, die geschilderten Nachteile des Standes der Technik zu überwinden und trotz Aufbau einer hohen Gegenkraft auf den Antrieb der Sperrkolben, hervorgerufen durch die Formluftzufuhr, Antriebe mit relativ geringer Antriebsleistung und damit mit geringen Baumaßen einsetzen zu können.

Gelöst ist diese Aufgabe erfindungsgemäß durch die im Kennzeichen des Hauptanspruchs angegebenen Maßnahmen.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigt:
- Figur 1: einen Querschnitt durch das Formwerkzeug in geschlossener Stellung vor Einleitung des Tiefziehvorganges.
- Figur 2: denselben Querschnitt nach teilweiser mechanischer Vorstreckung der Folienbahn durch den Streckhelfer.
- Figur 3: denselben Querschnitt nach Abschluss der pneumatischen Formung und nach der Aufwärtsbewegung von Streckhelfer und Sperrkolben.
- Figur 4: den Querschnitt gemäß Figur 1 bei einer Variante des Formwerkzeuges zum Erzielen eines bestimmten Verfahrensablaufes.

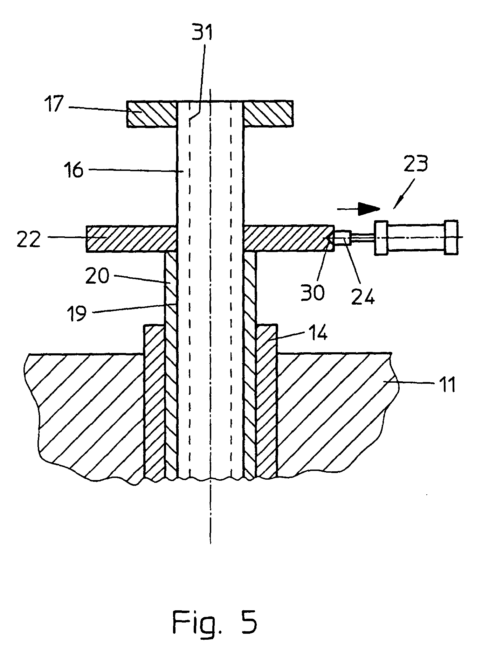

- Figur 5: eine Teilansicht einer ersten Variante einer Sperreinrichtung für den Sperrkolben.
- Figur 6: eine weitere Variante einer Sperreinrichtung für den Sperrkolben.
- Figur 7: eine weitere Variante einer Sperreinrichtung für den Sperrkolben.
- Figur 8: ein Detail X aus Figur 1 gemäß einer besonderen Ausführungsform.

Das Formwerkzeug kann einreihig oder mehrreihig mit mehreren Formnestern pro Reihe ausgebildet sein und besteht aus dem Oberteil 1 und dem Unterteil 2. Letzteres umfasst eine Grundplatte 3, einen Kühlblock 4 und in diesen pro Formnest eingesetzte Formeinsätze 5 mit der Gestalt der herzustellenden Behälter 6. Die Formeinsätze 5 sind einteilig oder zweiteilig ausgebildet und tragen bei kombiniert formenden und stanzenden Formwerkzeugen an der oberen, der Folienbahn 7 zugewandtem Seite, eine Schnittkante 8. Eine Kühlung der Formeinsätze 5 erfolgt über die Kammer 9 zwischen Kühlblock 4 und Außenform der Formeinsätze 5 in bekannter Weise. Zum Ausschieben der Behälter 6 aus den Formeinsätzen 5 dient ein verschiebbarer Formboden 10.

Das Oberteil 1 setzt sich zusammen aus einer Kopfplatte 11, einer Zwischenplatte 12, der Matrize 13 und einem in jedem Formnest angeordneten Niederhalter 14 mit einem in dessen Bohrung 19 verschiebbaren Streckhelfer 15. Jeder Niederhalter 14 ist federnd nachgiebig gehalten und schiebt nach dem Ausstanzen der Behälter 6 und nach dem Öffnen des Formwerkzeuges diese aus der Matrizenbohrung. Die Streckhelfer 15 sind jeweils über eine Stange 16 mit einer gemeinsamen Halteplatte 17 verbunden. Diese kann über eine nicht dargestellte Antriebseinrichtung verschoben werden.

Hinter jedem Streckhelfer 15 ist ein Sperrkolben 18 angeordnet, der gleitend und dichtend in der Bohrung 19 des Niederhalters 14 geführt ist. Der Sperrkolben 18 geht über in einen Schaft 20 , in dessen mittiger Bohrung 21 die Stange 16 des Streckhelfers 15 verläuft. Alle Schäfte 20 der in den Formnestern angeordneten Sperrkolben 18 sind an einer gemeinsamen Halteplatte 22 befestigt. Diese Halteplatte 22 ist mit einer durch den Pfeil 25 angedeuteten Antriebseinrichtung verbunden, mit der sie - entweder zusammen mit der Halteplatte 17 oder unabhängig von der Bewegung der Halteplatte 17 für die Streckhelfer 15 - über eine als Pfeil 26 dargestellte Antriebseinrichtung verschoben werden kann. Es liegen entweder zwei getrennte Antriebe für die beiden Halteplatten 17, 22 vor, was individuelle Bewegungsabläufe zueinander ermöglicht. Oder beide Halteplatten 17, 22 sind gekoppelt und werden von einem gemeinsamen Antrieb bewegt.

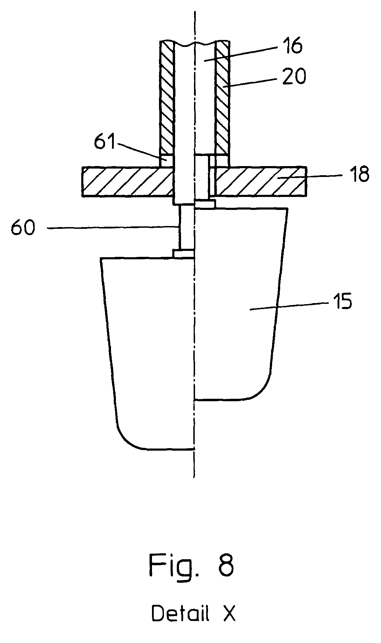

Eine vorteilhafte Gestaltung der Stange 16 ist in Figur 8 dargestellt. Sie trägt an ihrem dem Streckhelfer 15 zugewandten Ende eine Aussparung 60, die mit einzelnen Aussparungen 61, z. B in Form von Bohrungen, im Schaft 20 zur Deckung kommt, wenn die Sperrkolben 18 und die Streckhelfer 15 in engster Stellung zueinander stehen. Auf diese Weise kann bei zurückgefahrenem Streckhelfer 15 - Figur 8 links - die Formluft über die Aussparungen 60, 61 auf die Rückseite der Sperrkolben 18 fließen und über die Bohrungen 32, 33, 34 abgeleitet werden, und zwar gleich zu Beginn der Aufwärtsbewegung der Streckhelfer 15. Es muss nicht abgewartet werden, bis die Sperrkolben 18 die Bohrung 32 überfahren. Ein rascher Druckabbau ist gegeben, was die Taktzahl des Formwerkzeuges positiv beeinflusst. Diese Ausführung ist nur sinnvoll bei getrennten Antrieben für die Sperrkolben 18 und die Streckhelfer 15, da eine Relatiwerschiebung zueinander erforderlich ist.

Wenn die Antriebseinrichtung 25 der Sperrkolben 18 als Kniehebelantrieb ausgebildet ist, der in Strecklage steht, wenn die Sperrkolben 18 ihre untere Lage erreicht haben, kann die Antriebseinrichtung 25 mit geringer Leistung zum Verschieben versehen sein und durch diese Gestaltung eine hohe Haltekraft bei Einleitung der Formluft aufbringen. Eine Sperreinrichtung 23 ist dann nicht erforderlich. Die Endlage der Sperrkolben 18 ist dabei allerdings fix und nicht veränderbar.

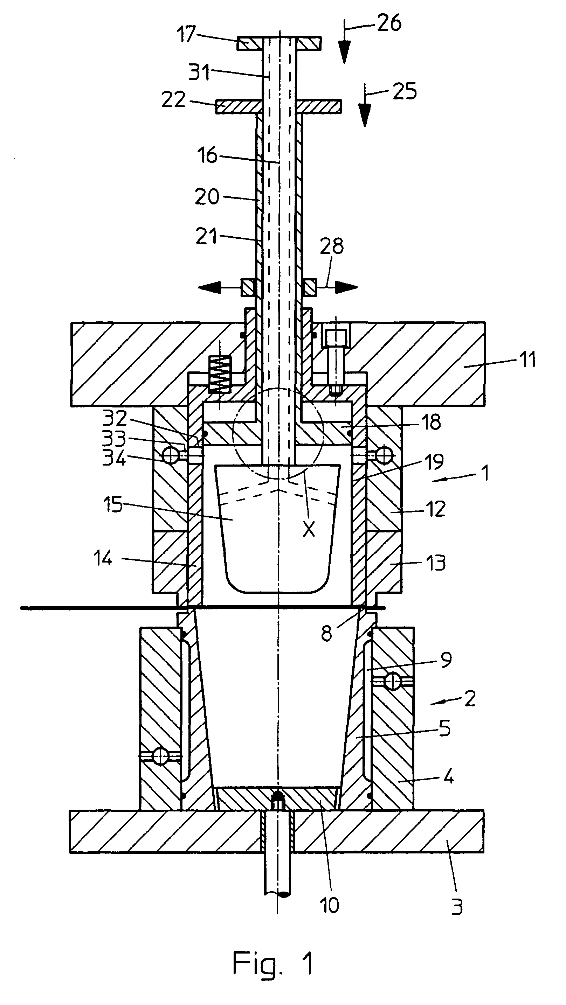

Bei anderen Antriebseinrichtungen 25 für die Sperrkolben 18 ist eine Sperreinrichtung 23 vorteilhaft, um die durch die Formluft entstehende Gegenkraft aufzunehmen, die dann so ausgebildet ist, dass sie die Sperrkolben 18 in einer bestimmten vorgegebenen Stellung hält. In den Figuren 1 bis 3 ist diese Sperreinrichtung 23 so angeordnet, dass sie auf einen oder mehrere Schäfte 20 wirkt, wobei die Wirkungsrichtung durch Pfeile dargestellt ist. Der Pfeil 28 symbolisiert offen, der Pfeil 29 gesperrt. Die Sperreinrichtung 23 kann aber in gleicher Weise an der Antriebseinrichtung 25 für die Halteplatte 22 wirken. Besteht diese Antriebseinrichtung 25 z. B. aus einem Pneumatikzylinder kann die Sperreinrichtung 23 so gestaltet werden, dass sie auf die Kolbenstange dieses Pneumatikzylinders wirkt. Solche als Klemmeinheit bezeichneten Einrichtungen werden handelsüblich angeboten.

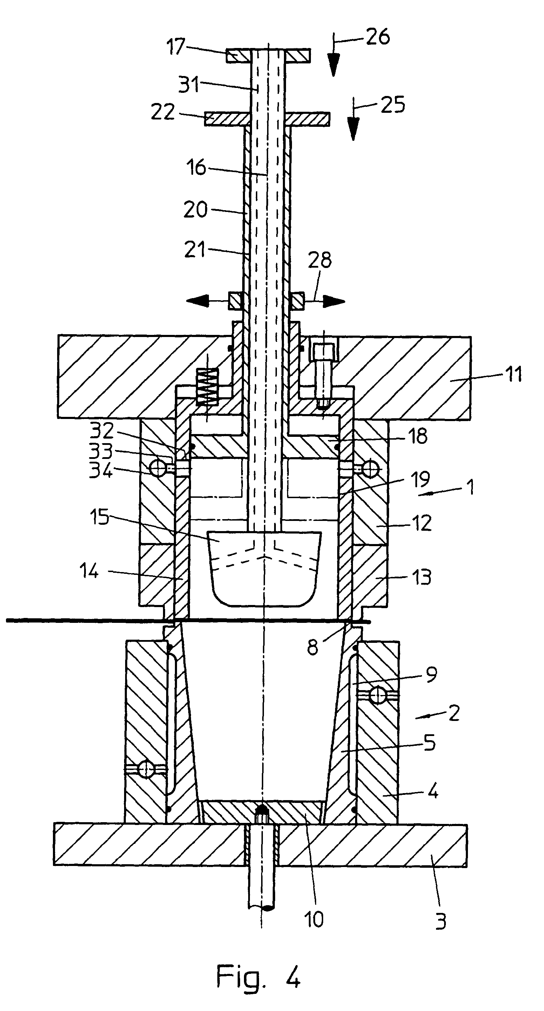

Die Sperreinrichtung 23 kann formschlüssig in Form von Verrastungselementen oder kraftschlüssig wirken. Die Verrastungsstellung ist entweder fest definiert oder variabel je nach Hub der Antriebseinrichtung 25 für die Halteplatte 22. Figur 4 zeigt beispielhaft eine solche auf die Halteplatte 22 in definierter Lage wirkende formschlüssige Verrastung in Form eines horizontal verschiebbaren Bolzens 24, der auf eine Ausnehmung 30 trifft. Diese Sperreinrichtung 23 ist vorzugsweise so ausgebildet, dass sie einen geringen Energieverbrauch benötigt, indem sie nur kurze Hübe ausführen muss, um eine Sperrwirkung zu erzielen. Kräftemäßig muss sie so dimensioniert sein, dass sie die Kraft auf die Sperrkolben 18 durch die Formluft auffangen kann.

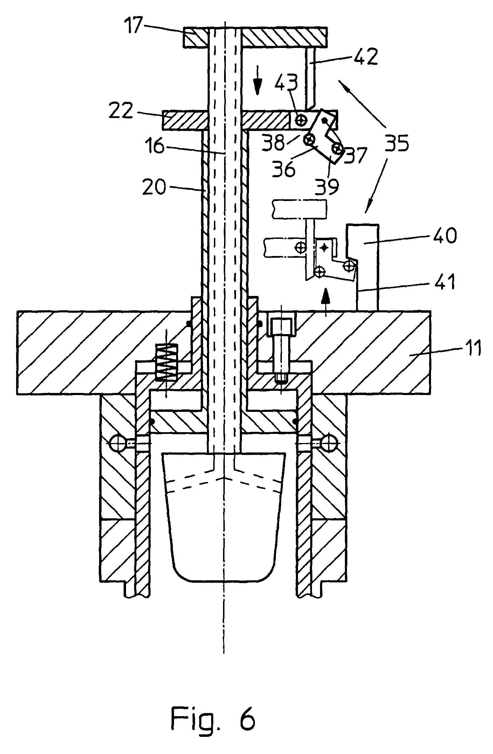

Eine Variante einer Sperreinrichtung in Form einer formschlüssigen Verriegelungseinrichtung 35 zeigt Figur 6. An der Halteplatte 22 ist an mindestens zwei Stellen ein Winkelhebel 36 im Drehpunkt 37 schwenkbar gelagert. Er trägt zwei drehbare Rollen 38, 39. Eine Verriegelungsplatte 40 mit Aussparung 41 sitzt auf der Kopfplatte 11, ein Verriegelungsdorn 42 ist mit der Halteplatte 17 verbunden. Nach der Abwärtsbewegung der Halteplatten 17, 22 wird die Halteplatte 17 noch einen bestimmten Weg weiter bewegt, sodass der Verriegelungsdorn 42, abgestützt von der Stützrolle 43, auf die Rolle 38 trifft und den Winkelhebel 36 so verschwenkt, dass die Rolle 39 in die Aussparung 41 gedrückt wird. Diese verriegelte Lage ist strichpunktiert dargestellt. Auf diese Weise erfolgt eine sichere Sperrwirkung für die Sperrkolben 18 entgegen der nun auftretenden Kraft, hervorgerufen durch die zugeleitete Formluft.

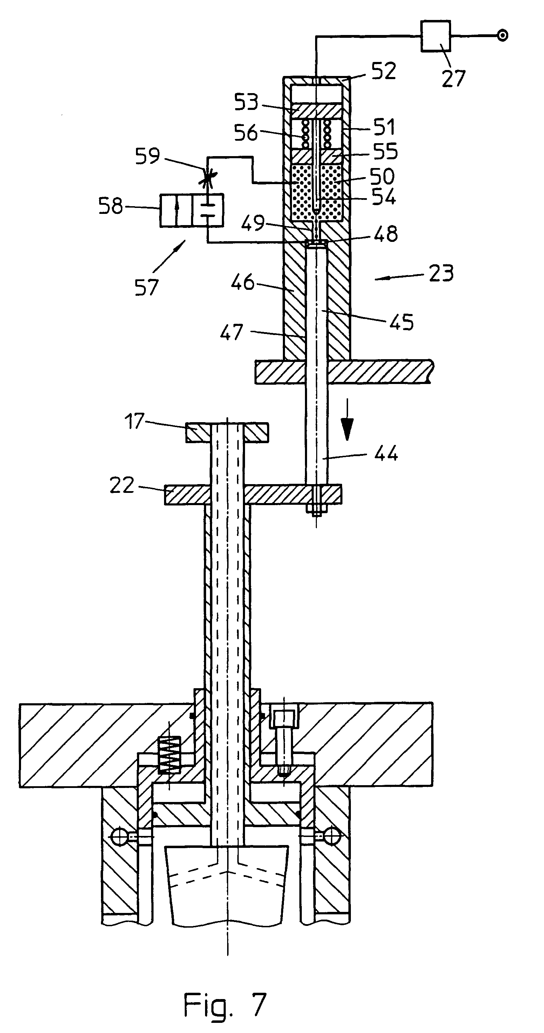

Eine weitere Variante einer Sperreinrichtung für die Sperrkolben 18 ist in Figur 7 dargestellt. An der Halteplatte 22 für die Sperrkolben 18 sind mindestens zwei Stangen 44 befestigt, deren Stangenende 45 sich bis in ein ortsfestes Gehäuse 46 mit einer Bohrung 47 erstreckt, in der es dichtend geführt ist. Der durch die Bohrung 47 gebildete Raum 48 ist mit einer Flüssigkeit - Öl, Wasser, Emulsion - gefüllt und steht über eine Verbindungsbohrung 49 mit einem Vorratsraum 50 in Verbindung. Dieser Vorratsraum 50 wird durch eine Bohrung 51 gebildet, die im Durchmesser größer ist als die Bohrung 49. Sie wird von einem Deckel 52 verschlossen. In ihr ist ein verschiebbarer Kolben 53 angeordnet, an dem mittig ein Bolzen 54 sitzt und dessen Querschnitt - zumindest am gegenüberliegenden Ende - dem Querschnitt der Bohrung 49 zwischen Raum 48 und Vorratsraum 50 entspricht. Ferner ist in Weiterbildung der Erfindung ein Kolben 55 zwischen Kolben 53 und Verbindungsbohrung 49 verschiebbar angeordnet und über eine Feder 41 auf Abstand zum Kolben 53 gehalten und sorgt dadurch für einen zusätzlichen Druck auf die Flüssigkeit, wenn sich die Sperrkolben 18 nach unten bewegen. Die Verschiebung des Kolbens 53 erfolgt durch Druckluftzufuhr über das Ventil 27 auf die Oberseite des Kolbens 53.

Eine Weiterbildung dieser Sperreinrichtung 23 besteht in der Anordnung eines Bypassventils 57. Dabei handelt es sich um eine Verbindungsleitung zwischen dem Raum 48 und dem zugehörigen Vorratsraum 50, die über ein Ventil 58 geöffnet oder geschlossen wird. Vorzugsweise ist eine einstellbare Drossel 59 eingebaut. Die Funktion des Bypassventils 57 besteht darin, vor der Aufwärtsbewegung der Sperrkolben 18, also nachdem sich der Formdruck aufgebaut hat und eine hohe Kraft auf die Sperrkolben 18 wirkt, den hohen Druck in der Flüssigkeit schnell abzubauen. Man kann auf diese Weise bei noch anstehendem Formdruck die Sperrkolben 18 bereits aufwärts fahren ohne negative Auswirkungen auf den Antrieb der Sperrkolben 18. Ein solches Bypassventil 57 bewirkt eine Querschnittsvergrößerung des in der Praxis relativ kleinen Querschnittes der Verbindungsbohrung 49. Folge ist eine rascher ablaufende Aufwärtsbewegung der Sperrkolben 18.

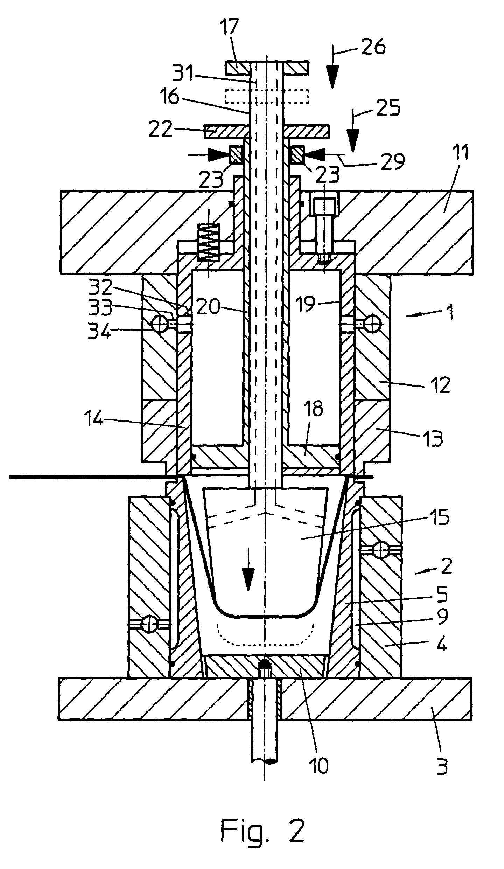

Gemäß einer ersten Variante findet folgender Verfahrensablauf beim Tiefziehen von Behältern 6 statt:
Nach dem Eintransport eines Abschnittes der erwärmten Folienbahn 7 zwischen die geöffneten Werkzeughälften 1, 2 wird dieses geschlossen. (Lage in Fig. 1 dargestellt). Jetzt werden gleichzeitig der Streckhelfer 15 und der Sperrkolben 18 nach unten bewegt über die entsprechende Antriebseinrichtung 25, 26 bis in die Stellung, die in Figur 2 dargestellt ist. Gleichzeitig mit der nun einsetzenden Zufuhr der Formluft über die Bohrung 31 in der Stange 16 wird die Sperreinrichtung 23 aktiviert, sodass sie den Sperrkolben 18 arretiert. Je nach den optimalen Verfahrensanforderungen für die zu formenden Behälter 6 kann eine Weiterfahrt der Streckhelfers 15 während der Formluftzufuhr, wie strichpunktiert angedeutet, erfolgen. Die Formluft erzeugt dabei nur eine geringe Gegenkraft auf jeden Streckhelfer 15 als Produkt aus Druck und Querschnitt der Stange 16, die von der Antriebseinrichtung 26 aufgebracht werden muss. Der Bedarf an Formluft ist minimiert, da der Raum innerhalb des Niederhalters nicht gefüllt werden muss, bedingt durch den Sperrkolben 18.

Gemäß einer zweiten Variante findet folgender Verfahrensablauf beim Tiefziehen der Behälter 6 statt:
Nach dem Eintransport eines Abschnittes der erwärmten Folienbahn 7 zwischen die geöffneten Werkzeughälften 1, 2 wird dieses geschlossen (Lage in Fig. 1 dargestellt). Jetzt fährt zunächst der Streckhelfer 15 nach unten, der Sperrkolben 18 bleibt in Ausgangslage. Durch die mechanische Verstreckung der Folienbahn 7 vergrößert sich der Raum im Innern des Niederhalters 14, wodurch ein Vakuum entstehen würde, das jedoch dadurch verhindert wird, dass man Luft vom Freien über die Bohrungen 32, 33, 34 nachströmen lässt. Dieses dadurch vergrößerte Luftvolumen wird nun durch den abwärts bewegten Sperrkolben 18, der die Bohrung 32 überfährt und damit absperrt, komprimiert. Je nach der geometrischen Gestalt des Streckhelfers 15 und der Behälterform und damit den Verhältnissen Anfangsvolumen zu Endvolumen ergibt sich eine Drucksteigerung, die als Formdruck wirkt. Es kann auf diese Weise entweder ganz auf die Zufuhr von Formluft verzichtet werden, sollte dieser Druck für das Tiefziehen ausreichen, oder es muss nur noch eine geringe Formluftmenge zugeführt werden, um den Luftdruck auf den erforderlichen Formdruck zu steigern. Eine Formlufteinsparung ist in jedem Falle gegeben.

Gemäß einer dritten Variante findet folgender Verfahrensablauf beim Tiefziehen der Behälter 6 statt:
Nach dem Eintransport eines Abschnittes der erwärmten Folienbahn 7 zwischen die geöffneten Werkzeughälften 1, 2 wird dieses geschlossen. (Lage in Figur 4 dargestellt). Zwischen Sperrkolben 18 und Oberkante Streckhelfer 14 ist ein entsprechend großer Abstand vorgesehen, sodass zunächst der Sperrkolben 18 nach unten bewegt wird, dabei als erstes die Bohrung 32 absperrt und noch ein Stück weiterfährt (strichpunktierte Lage). Dadurch bildet sich ein geringer Überdruck im Innern des Niederhalters. Jetzt fahren Sperrkolben 18 und Streckhelfer 14 gemeinsam weiter und das aufgebaute Luftpolster wirkt sich positiv auf den Tiefziehprozess aus. Am Ende der Fahrbewegung fährt der Streckhelfer 14 ggf. alleine noch eine bestimmte Wegstrecke bis in seine untere Endlage.

Nach dem Ausformen der Behälter 6 fahren bei allen beschriebenen Verfahren Streckhelfer 15 und Sperrkolben 18 nach oben, die Formluft wird über die Bohrung 31 und/oder über Bohrungen 32, 33, 34, die in Niederhalter 14 und Zwischenplatte 11 angeordnet sind, abgeleitet. Die Ableitung über diese Bohrungen 32, 33, 34 hat sich als günstig erwiesen, einerseits durch die Durchströmung des Innenraumes und die dabei eintretende gute Kühlwirkung auf die Behälteroberfläche. Zum anderen läuft die Ableitung der Formluft rasch ab, was sich positiv auf die Taktzahl auswirkt. Dabei sind die Bohrungen 31, 32, 33 so angeordnet, dass der zurückfahrende Sperrkolben 18 die Bohrung 31 überfährt und damit das Entweichen der Formluft automatisch freigibt.

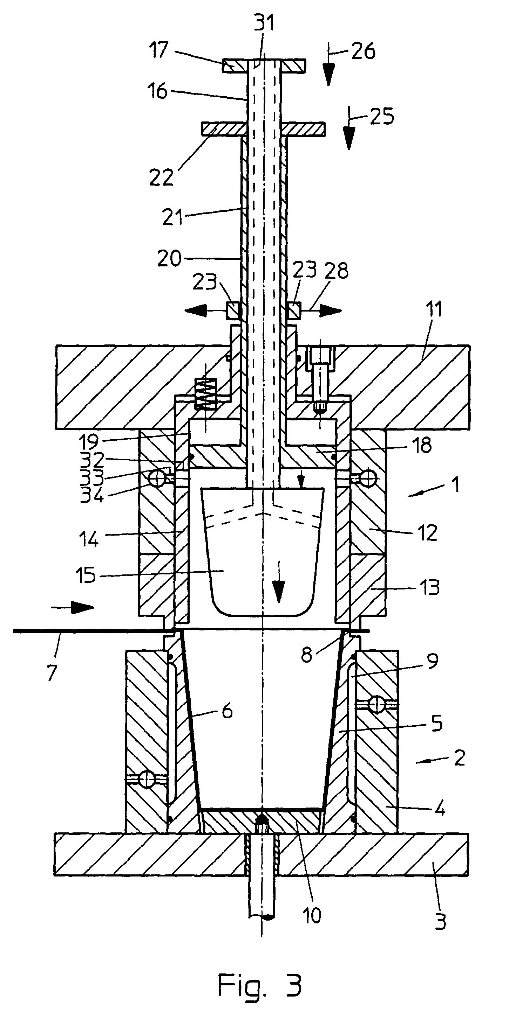

Nach dem Auskühlen der Behälter 6 werden diese bei kombiniert formenden und stanzenden Formwerkzeugen ausgestanzt (Lage in Figur 3 dargestellt) und bei wieder geöffnetem Formwerkzeug ausgeworfen. Bei einem reinen Formwerkzeug bleiben sie mit der Folienbahn 7 verbunden und werden Nachfolgeeinrichtungen zum Austrennen zugeführt.

## Patentansprüche

1. Formwerkzeug zum Tiefziehen von Behältern (6) aus einer erwärmten Folienbahn (7) aus thermoplastischem Kunststoff, bestehend aus Oberteil (1) und Unterteil (2), wobei das Unterteil (2) die Formeinsätze (5) trägt und das Oberteil (1) pro Formnest einen Niederhalter (14) und einen darin verschiebbaren Streckhelfer (15), wobei zwischen der Stange (16) des Streckhelfers (15) und der Bohrung (19) im Niederhalter (14) ein Sperrkolben (18) angeordnet ist, der über einen Schaft (20) mit einer Antriebseinrichtung (25) verbunden ist, **dadurch gekennzeichnet, dass** alle Sperrkolben (18) in einer in Richtung Unterteil (2) verfahrenen Stellung arretierbar sind.

2. Formwerkzeug nach Anspruch 1, **dadurch gekennzeichnet, dass** die Antriebseinrichtung (25) als Kniehebelantrieb ausgebildet ist, der bei auswärts gefahrenen Sperrkolben (18) in Strecklage steht.

3. Formwerkzeug nach Anspruch 1, **dadurch gekennzeichnet, dass** die Antriebseinrichtung (25) mit einer mit einem eigenen Antrieb versehenen Sperreinrichtung (23) verbunden ist.

4. Formwerkzeug nach Anspruch 3, **dadurch gekennzeichnet, dass** die Sperreinrichtung (23) direkt auf einen oder mehrere der Schäfte (20) wirkt.

5. Formwerkzeug nach Anspruch 3, **dadurch gekennzeichnet, dass** die Sperreinrichtung (23) an der die Schäfte (20) verbindenden Halteplatte (22) wirkt.

6. Formwerkzeug nach Anspruch 5, **dadurch gekennzeichnet, dass** die Sperreinrichtung (23) aus einem horizontal verschiebbaren Bolzen (24) besteht, der in Eingriff mit einer Ausnehmung (30) in der Halteplatte (22) gebracht werden kann.

7. Formwerkzeug nach Anspruch 3, **dadurch gekennzeichnet, dass** die Sperreinrichtung (23) aus einer Verriegelungseinrichtung (35) besteht, die eine formschlüssige Verrastung zwischen Halteplatte (22) und Kopfplatte (11) durch einen Relativhub zwischen Halteplatte (17) für die Sperrkolben (18) und Halteplatte (22) für die Streckhelfer (15) herbeiführt.

8. Formwerkzeug nach Anspruch 3, **dadurch gekennzeichnet, dass** die Sperreinrichtung (23) aus mindestens zwei an der Halteplatte (17) für die Sperrkolben (18) befestigten Stangen (44) besteht, deren Stangenende (45) in einem mit einer Flüssigkeit gefüllten Raum (48) verläuft, der über eine Verbindungsbohrung (49) mit einem Vorratsraum (50) für die Flüssigkeit verbunden ist sowie durch eine Absperreinrichtung zum Sperren bzw. Freigeben der Verbindungsbohrung (49) zwischen Raum (48) und Vorratsraum (50).

9. Formwerkzeug nach Anspruch 8, **dadurch gekennzeichnet, dass** die Absperreinrichtung aus einem Bolzen (54) besteht, dessen Querschnitt dem Querschnitt der Verbindungsbohrung (49) entspricht und der mit einem über einen Antrieb verschiebbaren Kolben (53) verbunden ist.

10. Formwerkzeug nach Anspruch 8 oder 9, **dadurch gekennzeichnet, dass** zwischen dem Raum (48) und dem Vorratsraum (50) ein Bypassventil (57) vorgesehen ist.

11. Formwerkzeug nach Anspruch 10, **dadurch gekennzeichnet, dass** im Bypassventil (57) eine einstellbare Drossel (59) integriert ist.

## Claims

1. Mould tool for the deep-drawing of containers (6) from a heated film web (7) of thermoplastic synthetic material, consisting of upper part (1) and lower part (2), wherein the lower part (2) carries the mould inserts (5) and the upper part (1) carries per mould nest a holding-down device (14) and a stretching aid (15) displaceable therein, wherein a blocking piston (18), which is connected by way of a shank (20) with a drive device (25), is arranged between the rod (16) of the stretching aid (15) and the bore (19) in the holding-down device (14), **characterised in that** all blocking pistons (18) are lockable in a setting movable in the direction of the lower part (2).

2. Mould tool according to claim 1, **characterised in that** the drive device (25) is constructed as a toggle joint lever drive which is disposed in extended position when the blocking pistons (18) are driven outwardly.

3. Mould tool according to claim 1, **characterised in that** the drive device (25) is connected with a blocking device (23) provided with an own drive.

4. Mould tool according to claim 3, **characterised in that** the blocking device (23) acts directly on one or more of the shanks (20).

5. Mould tool according to claim 3, **characterised in that** the blocking device (23) acts on the retaining plate (22) connecting the shanks (20).

6. Mould tool according to claim 5, **characterised in that** the blocking device (23) consists of a horizontally displaceable pin (24) which can be brought into engagement with the recess (30) in the retaining plate (22).

7. Mould tool according to claim 3, **characterised in that** the blocking device (23) consists of a locking device (35) which produces a mechanically positive detent between retaining plate (22) and head plate (11) by a relative stroke between retaining plate (17) for the blocking pistons (18) and retaining plate (22) for the stretching aids (15).

8. Mould tool according to claim 3, **characterised in that** the blocking device (23) consists of at least two rods (44), which are fastened to the retaining plate (17) for the blocking pistons (18) and the rod ends (45) of which run in a space (48), which is filled with a liquid and which is connected by way of a connecting bore (49) with a reservoir chamber (50) for the liquid, as well as by a shut-off device for shutting off or freeing the connecting bore (49) between space (48) and reservoir chamber (50).

9. Mould tool according to claim 8, **characterised in that** the shut-off device consists of a pin (54), the cross-section of which corresponds with the cross-section of the connecting bore (49) and which is connected with a piston (53) displaceable by way of a drive.

10. Mould tool according to claim 8 or 9, **characterised in that** a bypass valve (57) is provided between the space (48) and the reservoir chamber (50).

11. Mould tool according to claim 10, **characterised in that** an adjustable throttle (59) is integrated in the bypass valve (57).

## Revendications

1. Outil de moulage pour l'emboutissage de récipients (6) à partir d'une bande de film (7) en matière plastique thermoplastique, composé d'une partie supérieure (1) et d'une partie inférieure (2), dont la partie inférieure (2) porte les motifs de moulage (5) et la partie supérieure (1) comprend pour chaque poche de moulage un serre-flan (14) dans lequel peut se déplacer un auxiliaire d'étirage (15), avec disposé entre la barre (16) de l'auxiliaire d'étirage (15) et le perçage (19) du serre-flan (14), un piston de blocage (18) relié par le biais d'une tige (20) à un dispositif d'entraînement (25),
**caractérisé en ce que**
tous les pistons de blocage (18) peuvent être bloqués dans une position orientée en direction de la partie inférieure (2).

2. Outil de moulage selon la revendication 1,
**caractérisé en ce que**
le dispositif d'entraînement (25) est configuré sous la forme d'un entraînement à genouillère, qui se trouve dans une position allongée lorsque le piston de blocage (18) est déplacé vers l'extérieur.

3. Outil de moulage selon la revendication 1,
**caractérisé en ce que**
1e dispositif d'entraînement (25) est relié à un dispositif de blocage (23) pourvu de sa propre unité d'entraînement.

4. Outil de moulage selon la revendication 3,
**caractérisé en ce que**
le dispositif de blocage (23) agit directement sur un ou plusieurs des tiges (20).

5. Outil de moulage selon la revendication 3,
**caractérisé en ce que**
le dispositif de blocage (23) agit au niveau de la plaque de maintien (22) reliant les tiges (20).

6. Outil de moulage selon la revendication 5,
**caractérisé en ce que**
le dispositif de blocage (23) se compose d'une goupille (24) pouvant être déplacée horizontalement, et qui peut venir en prise dans un évidement (30) situé dans la plaque de maintien (22).

7. Outil de moulage selon la revendication 3,
**caractérisé en ce que**
le dispositif de blocage (23) se compose d'un dispositif de verrouillage (35), qui permet un blocage par enclenchement entre la plaque de maintien (22) et la plaque de tête (11), par le biais d'une course relative entre la plaque de maintien (17) pour les pistons de blocage (18) et la plaque de maintien (22) pour l'élément d'étirage (15).

8. Outil de moulage selon la revendication 3,
**caractérisé en ce que**
le dispositif de blocage (23) se compose d'au moins deux barres (44) fixées à la plaque de maintien (17) pour les pistons de blocage (18), l'extrémité de barre (45) s'étendant dans une chambre (48) remplie de liquide, raccordée à une chambre de réserve (50) pour le liquide par le biais d'un perçage de raccordement (49) ainsi que par le biais d'un dispositif de fermeture permettant de fermer ou d'ouvrir le perçage de raccordement (49) entre la chambre (48) et la chambre de réserve (50).

9. Outil de moulage selon la revendication 8,
**caractérisé en ce que**
le dispositif de fermeture se compose d'une goupille (54), dont la section transversale correspond à la section transversale du perçage de raccordement (49) et qui est reliée à un piston (53) pouvant être déplacé par le biais d'une unité d'entraînement.

10. Outil de moulage selon la revendication 8 ou 9,
**caractérisé en ce qu'**
il est prévu une soupape de dérivation (57) entre la chambre (48) et la chambre de réserve (50).

11. Outil de moulage selon la revendication 10,
**caractérisé en ce qu'**
une bobine réglable (59) est intégrée dans la soupape de dérivation (57).
